# EUROPÄISCHE PATENTANMELDUNG

(11) **EP 4 438 157 A1**
(43) Veröffentlichungstag der Anmeldung: **02.10.2024**
(21) Anmeldenummer: 24165388.0
(22) Anmeldetag: 22.03.2024
(51) Int. Cl.: B01D 46/00, B01D 46/02

(54) **FILTEREINRICHTUNG UND VERFAHREN ZUM HERSTELLEN**

(30) Priorität: 28.03.2023 DE 102023107788
(71) Anmelder: Haver & Boecker OHG, 59302 Oelde (DE)
(72) Erfinder: John, Detlef, 59229 Ahlen (DE); Achmedow, Michael, 59302 Oelde (DE); Kulbakov, Vladimir, 48291 Telgte (DE)
(74) Vertreter: BSB Patentanwälte Schütte & Engelen Partnerschaft mbB

(57) **Zusammenfassung**

Filtereinrichtung (50) umfassend ein von einem Fluid durchströmbares Kammergewebe (1) mit einer Kammer (2), wobei das Kammergewebe (1) einen Gewebekörper (3) aufweist, der durch zwei durch flottierende Abstandhalteelemente (4) miteinander verbundene Gewebelagen (5, 6) umfasst, sodass durch die Gewebelagen (5, 6) und die Abstandhalteelemente (4) die eine Kammer (2) begrenzt wird. In die Kammer (2) ist ein Reaktionsmaterial (200) eingebracht ist. Die Filtervorrichtung (100) umfasst ein Gehäuse (101) mit einem Einlass (102) und einem Auslass (103), wobei in dem Gehäuse (101) zwischen dem Einlass (102) und dem Auslass (103) ein Filterabschnitt (104) vorgesehen ist. Dabei ist in dem Filterabschnitt (104) eine Filtereinrichtung (50) angeordnet, wie sie zuvor beschrieben wurde. Das Verfahren zum Herstellen einer zuvor beschrieben Filtereinrichtung (50) ist, gekennzeichnet durch das Bereitstellen wenigstens eines Kammergewebes (1) und das Einfüllen von Reaktionsmaterial (200) in die Kammer (2).

## Beschreibung

Die vorliegende Erfindung betrifft eine Filtereinrichtung umfassend wenigstens ein wenigstens abschnittsweise von wenigstens einem Fluid durchströmbares Kammergewebe mit wenigstens einer Kammer, wobei das Kammergewebe wenigstens einen Gewebekörper aufweist, der durch wenigstens zwei durch flottierende Abstandhalteelemente miteinander verbundene Gewebelagen umfasst, sodass durch die Gewebelagen und die Abstandhalteelemente die wenigstens eine Kammer wenigstens abschnittsweise begrenzt wird. Dabei umfasst jede Gewebelage in wenigstens einer vorbestimmten Bindungsart festgelegte Kettelemente und Schusselemente. Die vorliegende Erfindung betrifft zudem eine Filtervorrichtung mit einer solchen Filtereinrichtung und ein Verfahren zur Herstellung einer solchen Filtereinrichtung.

Filter haben einen großen Einsatzbereich. Beispielsweise sind Filter aus verschiedensten Materialien im Stand der Technik bekannt geworden. Dabei können unter anderem Gewebe aus Kunststoff und/oder Metall zum Einsatz kommen. Je nach Einsatzgebiet werden auch Edelstahlgewebe verwendet.

Die DE 20 2004 002 663 U1 beschreibt ein spezielles Gewebe, welches im Bereich der Filtration eingesetzt werden kann, wobei zwischen zwei Gewebelagen durch flottierende Abstandhalteelemente Kammern gebildet werden. Die nach dem Herstellen aufeinanderliegenden Gewebelagen können dann z. B. als doppellagiges Filterelement zum Abtrennen von Stoffen mit einer der gewählten Maschenweite entsprechenden Objektgröße verwendet werden.

Auch Filterkerzen haben einen großen Einsatzbereich. Dabei sind Filterkerzen aber oft relativ großbauend und somit wenig flexibel einsetzbar. Auch die Herstellung von Filterkerzen ist oft komplex und aufwendig. Zudem können insbesondere die Größe und die Form eines dazugehörigen Gehäuses, in welchem oft auch Reaktionsmaterial vorgehalten werden, aufgrund der Geometrie der Filterkerzen oft nicht beliebig gewählt werden.

Es ist deshalb die Aufgabe der vorliegenden Erfindung, eine Filtervorrichtung zur Verfügung zu stellen, welche zusammen mit einem Reaktionsmaterial verwendet werden können und flexiblere Bauformen der Filtervorrichtung ermöglichen. Vorzugsweise ist eine solche Filtervorrichtung dann auch kostengünstiger und/oder effektiver.

Diese Aufgabe wird gelöst durch eine Filtereinrichtung mit den Merkmalen des Anspruchs 1, durch ein Verfahren zum Herstellen einer Filtereinrichtung mit den Merkmalen des Anspruchs 8 und durch eine Filtervorrichtung mit den Merkmalen des Anspruchs 13. Bevorzugte Weiterbildungen der Erfindung sind Gegenstand der Unteransprüche. Weitere Vorteile und Merkmale der vorliegenden Erfindungen ergeben sich aus der allgemeinen Beschreibung und der Beschreibung des Ausführungsbeispiels.

Die erfindungsgemäße Filtereinrichtung umfasst wenigstens ein wenigstens abschnittsweise von wenigstens einem Fluid durchströmbares Kammergewebe mit wenigstens einer Kammer. Dabei weist das Kammergewebe wenigstens einen Gewebekörper auf, der wenigstens zwei durch flottierende Abstandhalteelemente miteinander verbundene Gewebelagen umfasst, sodass durch die Gewebelagen und die Abstandhalteelemente die wenigstens eine Kammer wenigstens abschnittsweise begrenzt wird. Jede Gewebelage umfasst dabei in wenigstens einer vorbestimmten Bindungsart festgelegte Kettelemente und Schusselemente. Weiterhin ist in die Kammer wenigstens abschnittsweise wenigstens ein Reaktionsmaterial eingebracht.

Das Kammergewebe kann vorzugsweise ein Kammergewebe aus Drahtgewebe bzw. aus einem metallischen Material sein. Dabei können die Ketteelemente, die Schusselemente und die Abstandhalteelemente aus dem gleichen Material bestehen und/oder auch aus unterschiedlichen Materialien vorgesehen sein. So ist insbesondere auch die Verwendung eines sogenannten Hybridgewebes vorteilhaft. Dabei können z. B. unterschiedliche Materialien innerhalb einer Gewebelage verwendet werden. Es ist aber auch denkbar, dass jeweils eine Gewebelage aus einem gleichen Material gefertigt ist bzw. einen gleichen Aufbau aufweist, sich jedoch von dem Aufbau der anderen Gewebelage unterscheidet. Insbesondere können als Material metallische Werkstoffe wie beispielsweise Draht, insbesondere aus Edelstahl, Carbon, Fiberglas und/oder auch Kunststoffe verwendet werden.

Der Gewebekörper des Kammergewebes ist anmeldungsgemäß der Bereich des Kammergewebes, in welchem wenigstens eine Kammer ausgebildet ist. So ist insbesondere unter dem Begriff Gewebekörper eine durch die Gewebelagen in Verbindung mit den Abstandhalteelementen ausgebildeter dreidimensionale Gewebestruktur zu verstehen.

Die durch die Gewebelagen und die Abstandhalteelemente gebildete Kammer ist insbesondere von einem Fluid durchströmbar, wobei unter einem Fluid definitionsgemäß insbesondere gasförmige und/oder flüssige Medien bzw. Stoffe zu verstehen sind. Da die Kammer von einem Fluid wenigstens abschnittsweise durchströmbar ist, ist zudem offensichtlich, dass es sich um keine geschlossene Kammer handelt, da die Kammer von Drahtgewebelagen und Abstandhalteelementen begrenzt wird, sodass die mögliche Durchströmung und die zurückhaltende Wirkung der Kammer insbesondere durch die Maschenweite bzw. die Bindungsart der Gewebelagen und/oder die Anzahl und den Abstand der Abstandhalteelemente zueinander bestimmt wird.

Das Reaktionsmaterial tritt insbesondere in Interaktion mit seiner Umgebung und kann weiteres Material bzw. Stoffe vorzugsweise auch auf atomarer Ebene an sich binden, um beispielsweise Stoffe oder Stoffgemische aus einem Fluid, beispielsweise der Umgebungsluft, herauszufiltern. Das Reaktionsmaterial kann vorzugsweise aber sich z. B. auch auflösen, um Material abzugeben, um dieses dann in einem weiteren Prozess einzubringen.

Das Reaktionsmaterial ist vorzugsweise granulatartig, pulverförmig, schütt- bzw. rieselfähig oder und/oder anders ausgebildet.

Insbesondere kann das Reaktionsmaterial zum Beispiel ein Filtermedium bzw. ein Filterelement sein.

Die erfindungsgemäße Filtereinrichtung bietet viele Vorteile. Ein erheblicher Vorteil ist, dass durch das in die Kammer des Kammergewebes eingebrachte Reaktionsmaterial eine flexibel einsetzbare Filtereinrichtung zur Verfügung gestellt wird, welche insbesondere kostengünstig und nachhaltig ausgestaltet sein kann. Je nach Ausgestaltung kann beispielsweise das Reaktionsmaterial, wenn dieses seine Reaktionsfähigkeit verloren hat oder es sich aufgelöst hat, nachgefüllt und/oder ausgetauscht werden. Zudem wird es möglich, definierte Mengen von Reaktionsmaterial mit einer definierten Durchströmungsfläche in eine Reaktion einzubringen.

Insbesondere betrifft die vorliegende Erfindung auch die Verwendung des beschriebenen Kammergewebes für eine Filtereinrichtung.

Bevorzugt ist an wenigstens einer Seite des Gewebekörpers wenigstens eine Gewebelage als freier Gewebeabschnitt weitergeführt.

Insbesondere ist der freie Gewebeabschnitt in Laufrichtung bzw. in der Ausrichtung der Kammer weitergeführt.

Besonders bevorzugt ist das Kammergewebe in einem einzigen Webvorgang hergestellt. So wird es möglich, das Kammergewebe besonders einfach und somit auch kostengünstig in herzustellen. Insbesondere können die beiden Gewebelagen gleichzeitig auf einem Webstuhl hergestellt werden, wobei man in einem gemeinsamen Webprozess die Abstandhalteelemente flottierend in die beiden Gewebelagen einbindet, um so das Kammergewebe auszubilden. Dabei können die Abstandhalteelemente insbesondere durch Kett- und/oder Schusselemente zur Verfügung gestellt werden.

Vorzugsweise ist wenigstens ein Ende der Kammer verschlossen vorgesehen. Dabei kann die Kammer vorzugsweise bereits im Herstellungsprozess an einer Seite verschlossen gewebt werden. In anderen Ausgestaltungen kann aber vorzugsweise auch wenigstens ein Ende der Kammer verklebt, verklemmt und/oder anderweitig verschlossen werden. Beispielsweise können auch dafür vorgesehene Abschlusselemente in die Kammern eingesteckt bzw. eingesetzt werden und mit wenigstens einer Gewebelage verklebt, verklemmt verpresst und/oder anders damit verbunden werden. Insbesondere wenn wenigstens ein freier Gewebeabschnitt aus dem Gewebekörper herauslaufen weitergeführt ist, kann der Verschluss einer Kammer beispielsweise über das Zusammenkleben der freien Gewebeabschnitte leicht erreicht werden. Dadurch, dass die Kammer geschlossen ist, kann Reaktionsmaterial sicher in die Kammer eingefüllt werden, ohne dass das Reaktionsmaterial auf der anderen Seite wieder aus der Kammer herausfällt.

Besonders bevorzugt umfasst das Kammergewebe mehrere Kammern. Dabei ist insbesondere bevorzugt, dass die Verbindungsstellen der Abstandhalteelemente mit den einzelnen Gewebelagen versetzt zueinander vorgesehen sind, sodass quasi ineinandergreifende Kammerlagen entstehen, sodass die Gewebelagen durch die Abstandhalteelemente nicht auf einander zugezogen werden. So wird vermieden, dass sich Engstellen zwischen den Gewebelagen bilden, in welchen kein Reaktionsmaterial oder nur eine unzureichende Menge an Reaktionsmaterial vorhanden sein könnte.

In zweckmäßigen Weiterbildungen ist wenigstens ein Stabilisierungselement vorgesehen. Ein solches Stabilisierungselement kann beispielsweise durch verstärkte und/oder zusätzliche Schuss und/oder Kettelemente bereitgestellt werden. Je nach Ausgestaltung kann das Stabilisierungselement aber auch ein zusätzliches bzw. separates Bauteil sein.

In vorteilhaften Weiterbildungen ist das Stabilisierungselement, welches insbesondere als separates Bauteil ausgebildet ist, wenigstens abschnittsweise in wenigstens einer Kammer angeordnet. Dabei kann das Stabilisierungselement als ausschließlicher Inhalt dieser Kammer vorgesehen sein oder aber zusammen mit Reaktionsmaterial und/oder einem anderen Material in die Kammer eingebracht sein. Durch ein solches Stabilisierungselement kann eine stabile Form der Filtereinrichtung bzw. des Kammergewebes gewährleistet werden.

Bevorzugt ist in wenigstens ein Ende der Kammer wenigstens ein Abschlusselement eingesetzt. Sind mehrere Kammern vorgesehen, ist vorzugsweise wenigstens ein gemeinsames Abschlusselement für alle Kammern vorgesehen, wobei auch die Ausgestaltung mit einzelnen Abschlusselementen jeweils für eine Kammer zweckmäßig sein kann.

Durch ein solches Abschlusselement kann je nach Ausgestaltung eine vorbestimmte Funktionalität erreicht werden, wobei beispielsweise ein Verschluss der Kammer oder aber auch eine Einfüllöffnung durch ein Abschlusselement bereitgestellt werden kann.

Bevorzugt ist das Abschlusselement riegelartig ausgebildet. Dabei ist insbesondere eine riegelartige Ausgestaltung vorgesehen, wenn ein Abschlusselement für mehrere Kammern vorgesehenes. Auch durch ein solches riegelartiges Abschlusselement kann eine zusätzliche Stabilisierung der Filtereinrichtung bzw. des Kammergewebes erreicht werden und zudem wird ein stabiler Abschluss der Kammer(n) erreicht.

Ein Abschlusselement kann vorzugsweise aber auch mit dem Kammergewebe verklemmt oder anders damit verbunden werden.

Vorzugsweise umfasst das Abschlusselement wenigstens eine Öffnung zum Befüllen wenigstens einer Kammer. Dabei ist eine solche Öffnung insbesondere zum initialen Füllen und/oder auch zum Nachfüllen einer Kammer zweckmäßig einsetzbar.

Bevorzugt ist das Abschlusselement mit dem Kammergewebe wenigstens abschnittsweise verklebt, insbesondere mit wenigstens einem freien Gewebeabschnitt, wenn ein solcher vorgesehen ist. So kann eine stabile Verbindung zwischen Abschlusselement und Kammergewebe erreicht werden. Wenn das Abschlusselement mit einem freien Gewebeabschnitt verklebt und/oder anders verbunden wird, ist zudem eine besonders einfache Verbindung möglich.

Vorzugsweise ist wenigstens ein Fixierelement für das Abschlusselement vorgesehen. Über ein solches Fixierelement kann zusätzlich zu einer Verklebung oder ausschließlich eine Verbindung zwischen dem Kammergewebe und dem Abschlusselement bereitgestellt werden. Insbesondere klemmt ein Fixierelement das Kammergewebe wenigstens abschnittsweise zwischen Fixierelement und Abschlusselement ein.

Vorzugsweise ist das Fixierelement als aufschiebbare Schiene ausgebildet. Hierdurch kann einfach und schnell eine Verbindung bzw. eine Verklemmung von Abschlusselement, Kammergewebe und Fixierelement erreicht werden.

Bevorzugt ist wenigstens ein Verschlusselement vorgesehen. Ein solches Verschlusselement kann in zweckmäßigen Weiterbildungen beispielsweise durch das Abschlusselement zur Verfügung gestellt werden, insbesondere wenn dieses keine Öffnung zum Nachfüllen aufweist. Ein Verschlusselement kann vorzugsweise auch ein zusätzliches Bauteil sein, beispielsweise eine Art Schiene, welche dann zum Beispiel auf das Abschusselement aufgeschoben wird. Somit kann das Verschlusselement beispielsweise auch durch das Fixierelement bereitgestellt werden, insbesondere wenn dieses keine Öffnungen zum Nachfüllen von oder Füllen von Schüttgut oder Reaktionsmaterial aufweist. Insbesondere kann ein Verschlusselement beispielsweise auch eine Schiene wie z. B eine Flachschiene mit einem geeigneten Verschlusssystem sein.

Bevorzugt ist wenigstens eine Rahmeneinrichtung vorgesehen, die das Kammergewebe wenigstens abschnittsweise einfasst. Durch eine solche Rahmeneinrichtung kann eine besonders gute Stabilisierung bzw. Formgebung des Kammergewebes mit dem eingefügten Reaktionsmaterial erreicht werden. Zudem wird dadurch erreicht, dass die Filtereinrichtung kassettenartig ist bzw. dass ein relativ stabiles und gut handhabbares Filterelement bereitgestellt wird. Die Rahmeneinrichtung kann vorzugsweise einteilig und/oder auch mehrteilig sein. Insbesondere bei einer mehrteiligen Ausgestaltung können die einzelnen Bauteile der Rahmeneinrichtung vorzugsweise miteinander verbunden wie z. B. verklebt werden, um eine bessere Stabilität der Rahmeneinrichtung und somit der Filtereinrichtung zu erreichen.

Bevorzugt kann die Rahmeneinrichtung wenigstens teilweise und/oder abschnittweise fest mit dem Kammergewebe verbunden werden. Dazu kann die Rahmeneinrichtung wenigstens teilweise beispielsweise mit dem Kammergewebe verklebt oder anders damit fest und insbesondere nicht lösbar verbunden werden. Insbesondere die Bereiche bzw. Seiten, welche nicht zur Befüllung der Kammer(n) verwendet werden, können wenigstens abschnittsweise fest mit dem Kammergewebe verbunden sein.

Vorzugsweise umfasst die Rahmeneinrichtung wenigstens eine Schiene. Dabei kann eine Schiene insbesondere im Wesentlichen U-förmig und/oder flach und/oder dergleichen ausgebildet sein bzw. eine U-Schiene bzw. eine Flachschiene sein bzw. umfassen, sodass diese beispielsweise auf die Ränder des Kammergewebes aufgeschoben bzw. aufgesteckt werden können. Die Schienen können eine entsprechende Formgebung aufweisen, z. B. auf Gehrung geschnitten sein, um einen guten umlaufenden Sitz zu ermöglichen.

Besonders bevorzugt ist die Rahmeneinrichtung wenigstens abschnittsweise über wenigstens ein in wenigstens eine Kammer eingeschobenes Stabilisierungselement geführt. Bei einer solchen Ausgestaltung ist die Schiene insbesondere derart geformt, dass nach dem Aufsetzen bzw. Aufschieben der Schienen auf das in der Kammer angeordnete Stabilisierungselement das Stabilisierungselement und das davon umgebene Kammergewebe bzw. die Kammer innerhalb der Schiene zurückgehalten werden. Dabei ist unter geführt insbesondere auch geschoben zu verstehen.

Bevorzugt ist die Rahmeneinrichtung wenigstens abschnittsweise über das Abschlusselement geführt. So kann eine Verbindung zwischen Rahmeneinrichtung und Kammergewebe bzw. Abschlusselement geführt werden. Je nach Ausgestaltung kann somit das Fixierelement auch Teil der Rahmeneinrichtung sein oder umgekehrt. Auch hier ist wieder unter geführt auch insbesondere geschoben zu verstehen.

In zweckmäßigen Ausgestaltungen umfasst die Rahmeneinrichtung wenigstens ein Verbindungselement. Ein solches Verbindungselement kann insbesondere derart ausgestaltet sein, dass die Filtereinrichtung mit einer anderen Filtereinrichtung und/oder einer Gehäuseeinrichtung verbunden werden kann. Ein solches Filterelement kann der Rahmeneinrichtung zugeordnet sein bzw. von dieser umfasst sein oder auch als separates Bauteil ausgeführt sein.

In zweckmäßigen Ausgestaltungen ist dem Verbindungselement wenigstens ein Dichtelement zugeordnet. Ein solches Dichtelement ist insbesondere dann sinnvoll, wenn mehrere Filtereinrichtungen miteinander verbunden werden bzw. eine Filtereinrichtung in ein Gehäuse eingesetzt wird und kein freier Strömungsquerschnitt verbleiben soll, über welchen ein Fluid vorbeiströmen kann, ohne die Filtereinrichtung zu passieren. Das Dichtelement man von dem Verbindungselement umfasst sein bzw. in dieses integriert sein. Je nach Ausgestaltung kann das Dichtelement aber auch separat vorgesehen sein.

Das erfindungsgemäße Verfahren zum Herstellen einer Filtereinrichtung, wie sie zuvor beschrieben wurde, umfasst das Bereitstellen wenigstens eines Kammergewebes und das Einfüllen von Reaktionsmaterial in die Kammer.

Auch das erfindungsgemäße Verfahren zum Herstellen bietet die Vorteile, wie sie zuvor schon ausgeführt wurden. Insbesondere wird eine besonders einfache Art zur Verfügung gestellt, eine Filtereinrichtung herzustellen, wobei die Filtereinrichtung vorzugsweise besonders kostengünstig und je nach Ausgestaltung auch nachhaltig ausgeführt sein kann.

Bevorzugt wird die Kammer durch wenigstens eine wenigstens abschnittsweise Verformung vor dem Einfüllen des Reaktionsmaterials wenigstens an einem Ende aufgezogen. Dabei liegt das Kammergewebe in der Regel nach der Herstellung flach zusammen bzw. die Gewebelagen liegen relativ eng aufeinander, wobei die Abstandhalteelemente flach dazwischen angeordnet sind. Durch das Aufziehen der Kammer kann das Kammergewebe zumindest an dem Ende, an welchem es aufgezogen wird, in eine geeignete Ausformung gebracht werden. So kann vorzugsweise und beispielsweise der Eingang für ein Füllwerkzeug wie beispielsweise eine Fülllanze optimal vorbereitet.

Besonders bevorzugt wird die Kammer durch das Ziehen an wenigstens einem freien Gewebeabschnitt des Kammergewebes wenigstens an einem Ende aufgezogen. Durch das Vorsehen von einem oder vorzugsweise mehreren freien Gewebeabschnitten, die dann zum Beispiel als Handhabungsabschnitt dienen können, kann die Kammer besonders einfach aufgezogen werden.

Vorzugsweise wird wenigstens ein Füllwerkzeug wie zum Beispiel eine Fülllanze zum Füllen verwendet. Dabei kann die Fülllanze in die geöffnete bzw. vorgeöffnete Kammer(öffnung), eingeführt werden und öffnet beim Hineinschieben soweit notwendig die Kammer vollständig.

In zweckmäßigen Weiterbildungen werden mehrere Fülllanzen zum Füllen verwendet, insbesondere wenn mehrere Kammern vorgesehen sind. Dabei ist insbesondere eine parallele Befüllung und vorzugsweise ein paralleles Einführen der Fülllanzen in die Kammern vorgesehen. Hierdurch kann eine besonders schnelle Befüllung erreicht wird und zudem wird durch das parallele Befüllen verhindert, dass sich die Kammern ungünstig verformen bzw. eine falsche Form bzw. Kontur annehmen. So können alle Kammern vorzugsweise gleichmäßig gefüllt und ausgeformt werden.

Bevorzugt weist die Fülllanze eine vorbestimmte Kontur auf. Durch eine vorgegebene Kontur der Fülllanze kann auch die Form bzw. die finale Form der gefüllten Kammer des Kammergewebes wenigstens in einem gewissen Rahmen vorgegeben werden.

In bevorzugten Weiterbildungen wird das Kammergewebe beim Befüllen mit Reaktionsmaterial in einem Formkasten angeordnet. Ein derartiger Formkasten kann vorzugsweise als Negativform für die spätere gefüllte Form des Kammergewebes bzw. der Filtereinrichtung sein, sodass sich die Kammern in vorbestimmte Ausdehnungen beim Füllen mit Reaktionsmaterial ausformen.

Die erfindungsgemäße Filtervorrichtung umfasst wenigstens ein Gehäuse mit wenigstens einem Einlass und wenigstens einem Auslass, wobei in dem Gehäuse zwischen dem Einlass und dem Auslass wenigstens ein Filterabschnitt vorgesehen ist. Dabei ist wenigstens ein Fluid über den Einlass dem Filterabschnitt zuführbar und über den Auslass wieder aus dem Filterabschnitt abführbar. Weiterhin ist in dem Filterabschnitt wenigstens eine Filtereinrichtung angeordnet, wie sie zuvor beschrieben wurde.

Auch die erfindungsgemäße Filtervorrichtung bietet die Vorteile, wie sie zuvor schon ausgeführt wurden. Das Filterelement ist dabei insbesondere derart angeordnet, dass eine Zwangsführung des Fluids durch das Filterelement bzw. durch das Kammergewebe bzw. durch die Kammer hindurch gegeben bzw. gewährleistet ist. Dabei sind unter Fluiden insbesondere definitionsgemäß flüssige und/oder gasförmige Stoffe bzw. Stoffgemische zu verstehen.

Bevorzugt ist das Filterelement plissiert in dem Filterabschnitt angeordnet. Hierdurch kann erreicht werden, dass eine besonders große Filterfläche in dem Filterabschnitt zur Verfügung gestellt wird.

Besonders bevorzugt sind mehrere Filtereinrichtungen vorgesehen. Bei der Verwendung von mehreren Filtereinrichtungen können diese nebeneinander hintereinander oder auch andersartig in dem Gehäuse angeordnet sein.

Vorzugsweise sind die Filtereinrichtungen bei der Verwendung von mehreren Filtereinrichtungen im Wesentlichen mäanderförmig angeordnet. Auch durch das mäanderförmige bzw. die serpentinenartige Anordnung der Filtereinrichtungen kann eine plissierte Anordnung eines Filterelements bzw. Filtereinrichtung nachempfunden werden.

Um freie Strömungsquerschnitte zwischen mehreren Filtereinrichtungen zu verhindern bzw. zu vermeiden, ist bevorzugt wenigstes ein Verbindungselement umfasst, welches die Filtereinrichtungen miteinander verbindet.

Vorzugsweise ist wenigstens ein Dichtelement vorgesehen und/oder von Verbindungselement umfasst, um eine möglichst strömungs- bzw. fluiddichte Verbindung zwischen den einzelnen Filtereinrichtungen zu erreichen.

Ein Verbindungselement und/oder ein Dichtelement kann vorzugsweise auch bei der Verwendung von nur einer Filtereinrichtung zweckmäßig vorgesehen sein, um die Filtereinrichtung in dem Gehäuse so aufzunehmen, dass die Zwangsführung des Fluids durch das Kammergewebe hindurch gewährleistet ist.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1: eine rein schematische Darstellung eines Ausführungsbeispiels einer erfindungsgemäßen Filtereinrichtung in einer perspektivischen Ansicht;
- Fig. 2: eine rein schematische Ansicht eines Ausführungsbeispiels einer erfindungsgemäßen Filtereinrichtung in einer Explosionsdarstellung;
- Fig. 3: eine rein schematische vergrößerte Darstellung des Bereichs "A" aus Figur 2;
- Fig. 4: eine rein schematische vergrößerte Darstellung des Bereichs "B" aus Figur 2;
- Fig. 5: eine rein schematische vergrößerte Darstellung des Bereichs "C" aus Figur 2;
- Fig. 6: eine rein schematische Darstellung eines Ausführungsbeispiels eines Abschlusselements einer erfindungsgemäßen Filtereinrichtung in einer perspektivischen Ansicht;
- Fig. 7: eine rein schematische Darstellung eines Ausführungsbeispiels einer erfindungsgemäßen Filtervorrichtung in einer perspektivischen Ansicht;
- Fig. 8: eine rein schematische Darstellung eines Ausführungsbeispiels einer erfindungsgemäßen Filtervorrichtung in einer geschnittenen Ansicht von oben;
- Fig. 9: eine rein schematische Darstellung eines weiteren Ausführungsbeispiels einer erfindungsgemäßen Filtervorrichtung in einer geschnittenen Ansicht von oben;
- Fig. 10a: eine rein schematische Darstellung eines Kammergewebes für eine Filtereinrichtung in einer perspektivischen Ansicht; und
- Fig. 10b: die Vorlage (Foto) für Figur 10a.

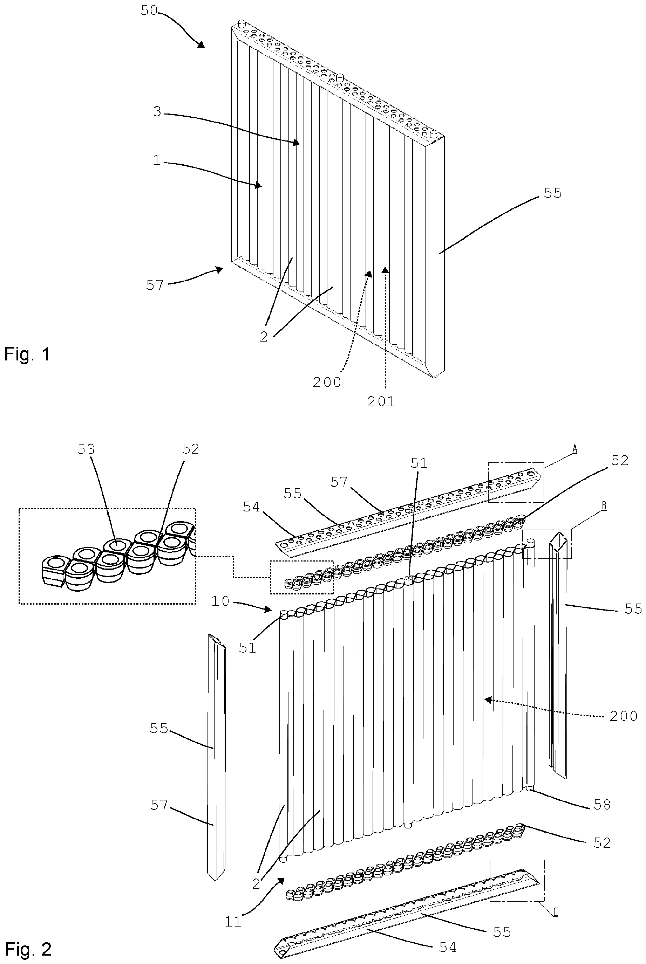

In Figur 1 ist rein schematisch eine erfindungsgemäße Filtereinrichtung 50 in einer perspektivischen Ansicht dargestellt. Die hier dargestellte Filtereinrichtung 50 umfasst dabei ein Kammergewebe 1 mit mehreren Kammern 2, wobei das Kammergewebe 1 in dem gezeigten Ausführungsbeispiel von einer das Kammergewebe 1 bzw. den Gewebekörper 3 umlaufende Rahmeneinrichtung 57 eingefasst ist. So wird hier ein kassettenartiges Filterelement durch die erfindungsgemäße Filtereinrichtung 50 bereitgestellt.

In den Kammern 2, welche sich hier über den gesamten Gewebekörper 3 erstrecken, ist erfindungsgemäß ein Reaktionsmaterial 200 vorgesehen, welches in dem gezeigten Ausführungsbeispiel ein Filtermedium 201 umfasst. Das Kammergewebe 1, welches in dem gezeigten Ausführungsbeispiel ein Kammergewebe 1 aus Drahtgewebe ist, kann von einem Fluid durchströmt werden, wodurch das Fluid beim Durchströmen der Kammern 2 bzw. des Gewebekörpers 3 mit dem Reaktionsmaterial 200 regieren kann bzw. in Kontakt dazu kommt.

In Figur 2 ist rein schematisch die zuvor schon gezeigte Filtereinrichtung 50 in einer Explosionsansicht dargestellt.

Hier erkennt man das Kammergewebe 1 mit den Kammern 2, welche einen Gewebekörper 3 bilden. In den Kammern 2 kann je nach Anwendungsfall ein bestimmtes Reaktionsmaterial 200 eingebracht werden.

Weiterhin ist gezeigt, dass die hier gezeigte Ausführungsform einer erfindungsgemäßen Filtereinrichtung 50 Stabilisierungselemente 51 umfasst. Dabei sind hier drei als Stäbe 58 ausgeführt Stabilisierungselement 51 vorgesehen, wobei hier in den jeweils äußersten Kammern 2 des Gewebekörpers 3 und in der mittleren Kammer 2 jeweils ein Stabilisierungselement 51 angeordnet ist. Durch diese stabförmigen Stabilisierungselemente 51 kann das Kammergewebe 1 bzw. der Gewebekörper 3 bzw. die Filtereinrichtung 50 in der Form stabilisiert werden.

Zudem ist gezeigt, dass in dem hier gezeigten Ausführungsbeispiel an beiden Enden 10, 11 der Kammern 2 Abschlusselemente 52 vorgesehen sind, welche in dem hier gezeigten Ausführungsbeispiel riegelartig vorgesehen sind, sodass ein Abschlusselement 52 bzw. ein Riegel für jeweils ein Ende 10, 11. Kammern 2 vorgesehen ist.

Je nach Ausgestaltung kann das Abschlusselement 52 die Kammern 2 verschließen. In dem hier aus gezeigten Ausführungsbeispiel umfasst das Abschlusselement 52 jedoch pro Kammer eine Öffnung 53, über welche Reaktionsmaterial 200 in die Kammern 2 eingefüllt und/oder nachgefüllt werden kann.

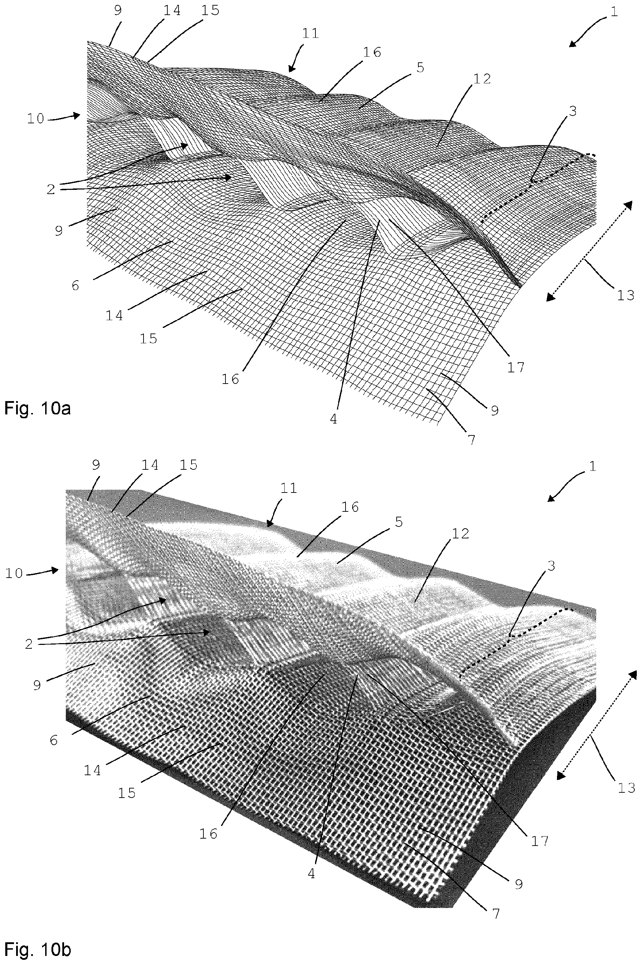

Um das Abschlusselement 52 an den Öffnungen bzw. Enden ein 10, 11 der Kammern 2 zu befestigen, können die Abschlusselemente 52 je nach Ausführungsbeispiel mit dem Kammergewebe 1 verklebt werden. Dazu können insbesondere hier nicht dargestellte freie Gewebeabschnitte 9 (siehe z. B. Figur 10a) des Kammergewebes 1 benutzt werden, welche sich an den Gewebekörper 3 anschließen.

Das Abschlusselement 52 wird in dem hier gezeigten Ausführungsbeispiel mit einem Fixierelement 54 an dem Kammergewebe 1 festgeklemmt. Dazu werden die hier schienenartig ausgebildeten Fixierelemente 54 bzw. die Schienen 55 auf die in das Kammergewebe 1 bzw. in die Kammern 2 eingesteckten Abschlusselemente 52 aufgeschoben. So wird das Kammergewebe 1 zwischen den Abschlusselementen 52 den Fixierelementen 54 festgeklemmt.

Wie zuvor schon ausgeführt ist in dem hier gezeigten Ausführungsbeispiel einer erfindungsgemäßen Filtereinrichtung 50 eine Rahmeneinrichtung 57 vorgesehen, welche hier umlaufend um den Gewebekörper 3 bzw. das Kammergewebe 1 vorgesehen ist.

Über diese Rahmeneinrichtung 57 wird eine weitere Stabilisierung der Filtereinrichtung 50 gewährleistet. Hier sind hier pro Seite einzelne Schienen 55 vorgesehen. Dabei werden hier die obere und die untere Schiene 55 der Rahmeneinrichtung 57 durch die Fixierelemente 54 bereitgestellt. Die Schienen 55 sind in dem hier gezeigten Ausführungsbeispiel aus Edelstahl gefertigt, können je nach Ausführung aber auch aus anderen Materialien und/oder Materialzusammensetzungen bestehen.

Die beiden seitlichen Schienen 55 werden hier durch das Aufschieben über die in den äußeren Kammern 2 angeordneten Stabilisierungselemente 51 mit dem Kammergewebe 1 verbunden.

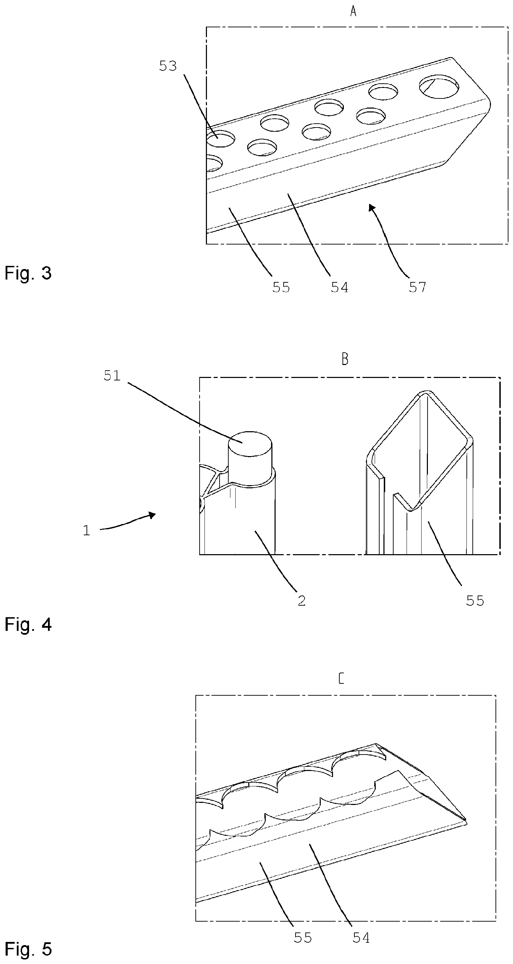

In den Figuren 3 bis 5 sind die in Figur 2 eingezeichneten Ausschnitte A, B, C jeweils einer Vergrößerung dargestellt.

In Figur 3 ist dargestellt, dass in dem gezeigten Ausführungsbeispiel das Fixierelement 54, welches gleichzeitig eine Schiene 55 der Rahmeneinrichtung 57 darstellt, wie das Abschlusselement 52 Öffnungen 53 aufweist, über welche die Kammern 2 nachgefüllt bzw. gefüllt werden können.

Je nach Ausgestaltung kann dann ein weiteres Verschlusselement 56 vorgesehen sein, um die Öffnungen 53 bzw. die Kammern 2 zu verschließen.

In Figur 4 ist der seitliche Bereich des Kammergewebes 1 mit der ganz außen liegenden Kammer 2 dargestellt, in welche hier ein Stabilisierungselement 51 eingeführt ist. Die daneben dargestellte Schiene 55 der Rahmeneinrichtung 57 wird dann über das Stabilisierungselement 51 und die darum angeordnete Kammer 2 bzw. das entsprechende Kammergewebe 1 geschoben, wobei wodurch die Schiene 55 mit dem Kammergewebe 1 verbunden wird.

In Figur 5 ist die untere Schiene 55 bzw. das untere Fixierelement 54 in einer rein schematischen Vergrößerung dargestellt.

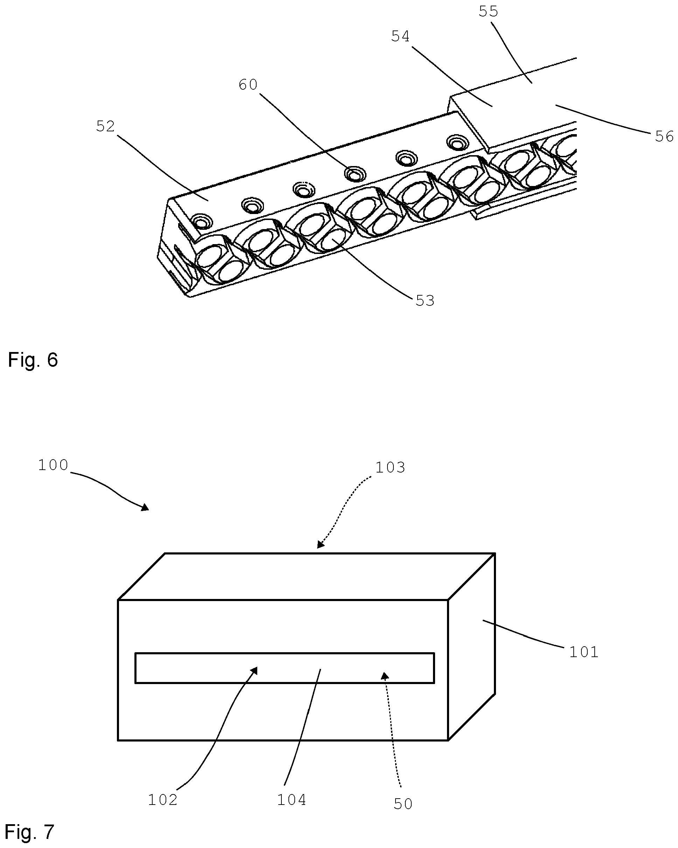

In Figur 6 ist rein schematisch ein riegelartiges Abschlusselement 52 in einer perspektivischen Ansicht dargestellt, wobei im rechten Bereich eine Schiene 55 bzw. ein Fixierelement 54 auf das Abschlusselement 52 aufgeschoben ist, wobei das Fixierelement 54 in dem hier gezeigten Ausführungsbeispiel gleichzeitig als Verschlusselement 56 dient.

Dazu sind in der hier gezeigten Ausführungsform keine Öffnung 53 in dem Fixierelement 54 vorgesehen, sodass durch das Aufschieben der Schiene 55 bzw. des Verschlusselements 56 auf das Abschlusselement 52 die Öffnungen 53 in dem Abschlusselement 52 verschlossen werden.

Zudem ist dargestellt, dass das Abschlusselement 52 an den Seiten 59 Vertiefungen 60 aufweist, in welche beispielsweise ein Klebstoff eingebracht werden kann, um das Kammergewebe 1 mit dem Abschlusselement 52 zu verkleben. Dazu eignen sich insbesondere an den Gewebekörper 3 anschließende freie Gewebeabschnitte 9 des Kammergewebes 1 (siehe z. B. Fig. 10a). So kann zusätzlich zu dem Fixierelement 54 oder je nach Ausgestaltung auch ausschließlich eine Befestigung des Abschusselements 52 an dem Kammergewebe 1 erreicht werden.

In Figur 7 ist rein schematisch eine erfindungsgemäße Filtervorrichtung 100 gezeigt, welche in dem hier gezeigten Ausführungsbeispiel ein Gehäuse 101 mit einem Einlass 102 und einem Auslass 103 umfasst. In dem Gehäuse 101 ist zwischen dem Einlass 102 und dem Auslass 103 ein Filterabschnitt 104 vorgesehen, in welchem wenigstens eine Filtereinrichtung 50 angeordnet ist.

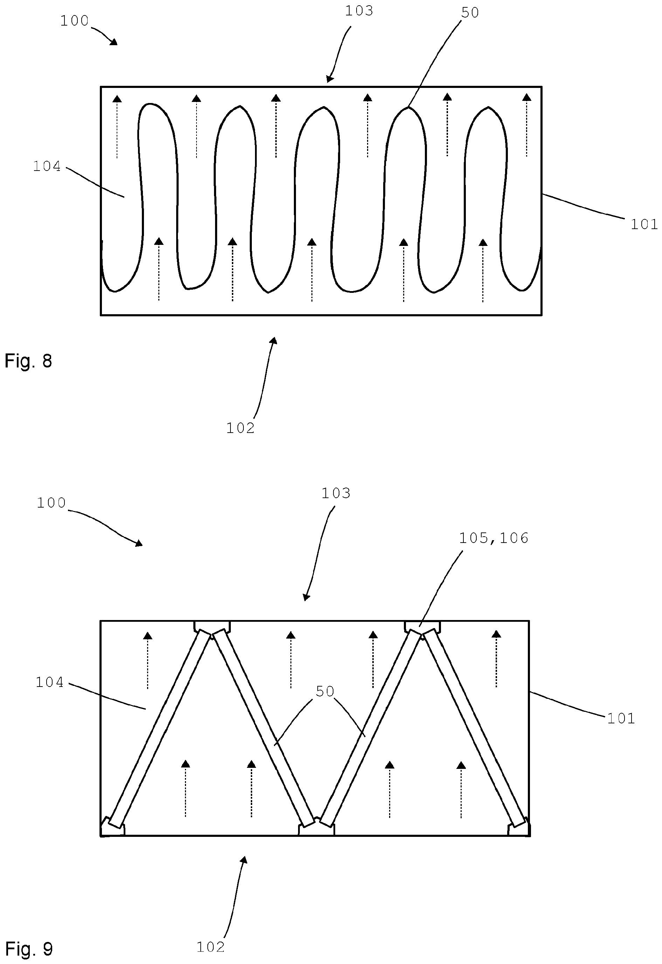

In Figur 8 ist rein schematisch ein Ausführungsbeispiel einer erfindungsgemäßen Filtervorrichtung 100 in einer geschnittenen Ansicht von oben dargestellt.

Auch hier ist zu erkennen, dass in dem Gehäuse 101 ein Einlass 102 und ein Auslass 103 vorgesehen sind, wobei dazwischen ein Filterabschnitt 104 mit einer darin angeordneten Filtereinrichtung 50 umfasst.

Die Filtereinrichtung 50 ist dabei in dem gezeigten Ausführungsbeispiel plissiert vorgesehen, um eine möglichst große Filterfläche innerhalb des Filterabschnitts 104 bereitzustellen. So ist die über die Pfeile angedeutete Zwangsdurchströmung des Gewebekörpers 3 bzw. des Reaktionsmaterials 200 in den Kammern 2 des Kammergewebes 1 gewährleistet.

Um eine Zwangsdurchströmung der Filtereinrichtung 50 zu gewährleisten, kann die Filtereinrichtung 50 in geeigneter Art und Weise mit der Gehäuseeinrichtung 1 verbunden sein, wobei insbesondere die Ausgestaltung und die Größe der Filtereinrichtung 50 an die Größe des Gehäuses 101 der Filtervorrichtung 100 angepasst sind.

In Figur 9 ist rein schematisch dargestellt, dass in dem Filterabschnitt 104 eines weiteren Ausführungsbeispiels einer erfindungsgemäßen Filtervorrichtung 100 mehrere kassettenartige Filtereinrichtungen 50 angeordnet sind. Dabei sind die Filtereinrichtungen 50 hier mäanderförmig bzw. zickzackförmig in dem Gehäuse 101 bzw. dem Filterabschnitt 104 angeordnet, um die plissierte Ausgestaltung gemäß Figur 8 nachzuempfinden und eine möglichst große Filterfläche in dem Filterabschnitt 104 bereitzustellen.

Um die Filtereinrichtungen 50 sicher in dem Filterabschnitt 104 aufzunehmen und auch eine Zwangsführung des durch den Filterabschnitt 104 strömenden Fluids zu erreichen, sind hier Verbindungselemente 105 vorgesehen, in welche die Filtereinrichtungen 50 eingeschoben werden können.

Um eine dichte Verbindung zwischen Gehäuse 101 und Filtervorrichtung 50 zu erreichen, umfassen die Verbindungselemente 105 in dem hier gezeigten Ausführungsbeispiel Dichtelement 106, welche beispielsweise durch eine Gummidichtung bereitgestellt werden können.

In Figur 10a ist rein schematisch ein Ausführungsbeispiel eines erfindungsgemäßen Kammergewebes 1 in einer perspektivischen Ansicht dargestellt. Dabei umfasst das hier gezeigte Kammergewebe 1 eine erste Gewebelage 5 und eine zweite Gewebelage 6, welche im Wesentlichen parallel zueinander angeordnet sind.

Das Kammergewebe 1 weist in dem hier gezeigten Ausführungsbeispiel einen Gewebekörper 3 auf, welcher hier einen Bereich des Kammergewebes 1 definiert, in welchem die Gewebelagen 5, 6 mithilfe von flottierenden Abstandhalteelementen 4 so miteinander verbunden sind, dass Kammern 2 bzw. taschenartige Strukturen im Bereich des Gewebekörpers 3 entstehen.

Je nach Ausgestaltung und Anwendung können für das Kammergewebe 1 bzw. für die Gewebelagen 5, 6 und die Abstandhalteelemente 4 gleiche oder auch unterschiedliche Materialien verwendet werden.

In dem hier gezeigten Ausführungsbeispiel ist ein reines Drahtgewebe vorgesehen, sodass die Ketteelemente 7 und die Schusselemente 7 und auch die Abstandhalteelemente 4 hier aus Draht bestehen bzw. durch Drähte zur Verfügung gestellt werden. Somit sind die beiden Gewebelagen 5, 6 hier Drahtgewebelagen 12.

Die Kammern 2 des gezeigten Kammergewebes 1 können je nach Anwendung und Ausgestaltung mit verschiedenen Objekten, Gegenständen bzw. Substraten und/oder dergleichen gefüllt werden, erfindungsgemäß mit einem Reaktionsmaterial 200.

Dazu sind die Kammern 2 in dem hier gezeigten Ausführungsbeispiel an dem Ende 11 der Kammern 2 mit verschlossen vorgesehen. Dabei sind hier die Kammern 2 an dem Ende 11 geschlossen gewebt, sodass die geschlossenen Kammern 2 direkt beim Herstellungsprozess bzw. durch den Webprozess hergestellt wird. Je nach Ausgestaltung können die Kammern 2 aber auch zunächst offen vorgesehen werden und anschließend bei Bedarf auf eine geeignete Art verschlossen werden. So können beispielsweise die Kammern verklebt oder auch verklemmt werden oder z. B. auch mit bestimmten Verschlusselementen verschlossen werden.

Der Gewebekörper 3 weist eine erste Erstreckung 13 auf, welche in dem hier gezeigten Ausführungsbeispiel der Laufrichtung der Kammern 2 entspricht. Erfindungsgemäß schließt sich in Richtung der ersten Erstreckung an den Gewebekörper 3 wenigstens ein freier Gewebeabschnitt 9 wenigstens an einer Gewebelage 5, 6 an. In dem hier gezeigten Ausführungsbeispiel sind an dem Ende 10 der Kammern an 2 an beiden Gewebelage 5, 6 freie Gewebeabschnitte 9 vorgesehen.

Durch das Vorsehen der freien Gewebeabschnitte 9 wird die Handhabung des Kammergewebes 1 erheblich erleichtert. So ist in dem gezeigten Ausführungsbeispiel jeder Gewebeabschnitt 12 als Handhabungsabschnitt 14 vorgesehen, über welchen das fertiggestellte Kammergewebe 1 geöffnet werden kann. So wird es möglich, dass beispielsweise durch das Ergreifen und Auseinanderziehen der beiden freien Gewebeabschnitt 9 die zunächst durch das Herstellungsverfahren aufeinanderliegenden Gewebelagen 5, 6 auseinandergezogen werden, sodass sich die Kammern 2 öffnen bzw. ausbilden.

Je nach Ausgestaltung kann zumindest wenigstens der Anfang der Kammer 2 so weit aufgezogen werden, dass beispielsweise ein entsprechendes Werkzeug oder auch ein Füllorgan wie beispielsweise eine Fülllanze zuverlässig und ungestört in die Kammer 2 eintauchen kann, um das Reaktionsmaterial 200 in die Kammern 2 einzubringen.

Je nach Ausgestaltung kann wie in dem hier gezeigten Ausführungsbeispiel der freie Gewebeabschnitt 9 auch als Befestigungsabschnitt 15 vorgesehen sein. So kann beispielsweise ein Abschlusselement 52 oder ein beliebiges anderes Bauteil an bzw. wenigstens abschnittsweise in einer Kammer 2 vorgesehen werden und über den freien Gewebeabschnitt 9 bzw. den Befestigungsabschnitt 14 befestigt werden.

So kann beispielsweise ein Abschlusselement 52 und/oder dergleichen mit dem freien Gewebeabschnitt 12 bzw. dem Befestigungsabschnitt 15 verklebt, verpresst, verklemmt und/oder anderweitig verbunden werden.

In dem gezeigten Ausführungsbeispiel ist weiterhin dargestellt, dass die äußeren Wandungen 16 der Kammern 2 durch die Gewebelagen 5, 6 gebildet werden. Die Wandungen 17 zwischen den einzelnen Kammern 2 werden durch die Abstandhalteelemente 4 definiert, wobei hier als Wandungen 17 parallel zueinander/nebeneinander verlaufende Abstandhalteelemente 4 vorgesehen sind.

In Figur 10a sind dabei der besseren Darstellbarkeit halber die Bereiche zwischen den einzelnen Abstandhalteelemente 4 als weiße Flächen und nicht transparent dargestellt, um die Ausgestaltung der Kammern 2 und des komplexen Gewebes besser zu veranschaulichen.

Die korrekte Ausgestaltung ist in Figur 10b dargestellt, wobei hier das als Vorlage für Figur 10a dienende Foto dargestellt ist.

### Bezugszeichenliste

| | | | |
|---|---|---|---|
| 1 | Kammergewebe | 100 | Filtervorrichtung |
| 2 | Kammer | 101 | Gehäuse |
| 3 | Gewebekörper | 102 | Einlass |
| 4 | Abstandhalteelemente | 103 | Auslass |
| 5 | Gewebelage | 104 | Filterabschnitt |
| 6 | Gewebelage | 105 | Verbindungselement |
| 7 | Kettelemente | 106 | Dichtelement |
| 8 | Schusselemente | | |
| 9 | freier Gewebeabschnitt | | |
| 10 | Ende | 200 | Reaktionsmaterial |
| 11 | Ende | 201 | Filtermedium |
| 12 | Drahtgewebelage | | |
| 13 | Erstreckung | | |
| 14 | Handhabungsabschnitt | | |
| 15 | Befestigungsabschnitt | | |
| 16 | Wandung | | |
| 17 | Wandung | | |
| 50 | Filtereinrichtung | | |
| 51 | Stabilisierungselement | | |
| 52 | Abschlusselement | | |
| 53 | Öffnung | | |
| 54 | Fixierelement | | |
| 55 | Schiene | | |
| 56 | Verschlusselement | | |
| 57 | Rahmeneinrichtung | | |
| 58 | Stab | | |
| 59 | Seite | | |
| 60 | Vertiefung | | |

## Patentansprüche

1. Filtereinrichtung (50) umfassend wenigstens ein wenigstens abschnittsweise von wenigstens einem Fluid durchströmbares Kammergewebe (1) mit wenigstens einer Kammer (2), wobei das Kammergewebe (1) wenigstens einen Gewebekörper (3) aufweist, der durch wenigstens zwei durch flottierende Abstandhalteelemente (4) miteinander verbundene Gewebelagen (5, 6) umfasst, sodass durch die Gewebelagen (5, 6) und die Abstandhalteelemente (4) die wenigstens eine Kammer (2) wenigstens abschnittsweise begrenzt wird, wobei jede Gewebelage (5, 6) in wenigstens einer vorbestimmten Bindungsart festgelegte Kettelemente (7) und Schusselemente (8) umfasst,
**dadurch gekennzeichnet,**
**dass** in die Kammer (2) wenigstens abschnittsweise wenigstens ein Reaktionsmaterial (200) eingebracht ist.

2. Filtereinrichtung (50) nach Anspruch 1, wobei an wenigstens einer Seite des Gewebekörpers (3) wenigstens eine Gewebelage (5, 6) als freier Gewebeabschnitt (9) weitergeführt ist und/oder wobei das Kammergewebe (1) in einem einzigen Webvorgang hergestellt ist.

3. Filtereinrichtung (50) nach einem der vorhergehenden Ansprüche, wobei wenigstens ein Ende (10) der Kammer (2) verschlossen ist und/oder wobei das Kammergewebe (1) mehrere Kammern (2) umfasst.

4. Filtereinrichtung (50) nach einem der vorhergehenden Ansprüche, wobei wenigstens ein Stabilisierungselement (51) vorgesehen ist, wobei das Stabilisierungselement (51) vorzugsweise wenigstens abschnittsweise in wenigstens einer Kammer (2) angeordnet ist und/oder wobei wenigstens ein Verschlusselement (56) vorgesehen ist.

5. Filtereinrichtung (50) nach einem der vorhergehenden Ansprüche, wobei in ein Ende (10) der Kammer (2) wenigstens ein Abschlusselement (52) eingesetzt ist, wobei das Abschlusselement (52) vorzugsweise riegelartig ausgebildet ist und/oder wobei das Abschusselement (52) wenigstens eine Öffnung (53) zum Befüllen wenigstens einer Kammer (2) umfasst und/oder wobei das Abschlusselement (52) mit dem Kammergewebe (1) verklebt ist, insbesondere mit wenigstens einem freien Gewebeabschnitt (7)und/oder wobei wenigstens ein Fixierelement (54) für das Abschlusselement (52) vorgesehen ist, welches insbesondere als aufschiebbare Schiene (55) ausgebildet ist.

6. Filtereinrichtung (50) nach einem der vorhergehenden Ansprüche, wobei wenigstens eine Rahmeneinrichtung (57) vorgesehen ist, die das Kammergewebe (1) wenigstens abschnittweise einfasst, wobei die Rahmeneinrichtung (57) vorzugsweise wenigstens eine Schiene (55) umfasst.

7. Filtereinrichtung (50) nach dem vorhergehenden Anspruch, wobei die Rahmeneinrichtung (57) wenigstens abschnittsweise über wenigstens ein in wenigstens eine Kammer (2) eingeschobenes Stabilisierungselement (51) geführt ist und/oder wobei die Rahmeneinrichtung (52) wenigstens abschnittsweise über das Abschlusselement (52) geführt ist und/oder wobei die Rahmeneinrichtung (52) wenigstens ein Verbindungselement (58) umfasst, wobei dem Verbindungselement (58) vorzugsweise wenigstens ein Dichtelement (59) zugeordnet ist.

8. Verfahren zum Herstellen einer Filtereinrichtung (50) nach einem der vorhergehenden Ansprüche, **gekennzeichnet durch** die folgenden Schritte:
- Bereitstellen wenigstens eines Kammergewebes (1)
- Einfüllen von Reaktionsmaterial (200) in die Kammer (2).

9. Verfahren nach dem vorhergehenden Anspruch, wobei die Kammer (2) durch eine wenigstens abschnittsweise Verformung vor dem Einfüllen des Filtermediums (200) wenigstens an einem Ende (10) aufgezogen wird und/oder wobei die Kammer (2) durch das Ziehen an wenigstens einem freien Gewebeabschnitt (9) des Kammergewebes (1) wenigstens an einem Ende (10) aufgezogen wird.

10. Verfahren nach einem der vorhergehenden Ansprüche, wobei wenigstens eine Fülllanze zum Füllen verwendet wird, wobei die Fülllanze vorzugsweise eine vorbestimmte Kontur aufweist.

11. Verfahren nach dem der vorhergehenden Anspruch, wobei mehrere Kammern (2) vorgesehen sind und wobei mehrere Fülllanzen zum Füllen verwendet werden.

12. Verfahren nach einem der vorhergehenden Ansprüche, wobei das Kammergewebe (1) beim Befüllen mit Reaktionsmaterial (200) in einem Formkasten angeordnet ist.

13. Filtervorrichtung (100) umfassend wenigstens ein Gehäuse (101) mit wenigstens einem Einlass (102) und wenigstens einem Auslass (103), wobei in dem Gehäuse (101) zwischen dem Einlass (102) und dem Auslass (103) wenigstens ein Filterabschnitt (104) vorgesehen ist, wobei wenigstens ein Fluid über den Einlass (102) dem Filterabschnitt (104) zuführbar ist und über den Auslass (103) aus dem Filterabschnitt (104) abführbar ist,
**dadurch gekennzeichnet,**
**dass** in dem Filterabschnitt (104) wenigstens eine Filtereinrichtung (50) nach einem der Ansprüche 1 bis 20 angeordnet ist.

14. Filtervorrichtung (100) nach dem vorhergehenden Anspruch, wobei das Filtereinrichtung (50) plissiert und/oder im Wesentlichen mäanderförmig in dem Filterabschnitt (104) angeordnet ist.

15. Filtervorrichtung (100) nach einem der beiden vorhergehenden Ansprüche, wobei mehrere Filtereinrichtungen vorgesehen sind, wobei insbesondere wenigsten ein Verbindungselement (105) und/oder wenigstens ein Dichtelement (106) zwischen den einzelnen Filtereinrichtungen (50) vorgesehen ist.
